(19) Europäisches Patentamt
European Patent Office
Office européen des brevets

(11) EP 3 586 948 A1

(12) EUROPEAN PATENT APPLICATION

(43) Date of publication:
**01.01.2020 Bulletin 2020/01**

(21) Application number: **18181039.1**

(22) Date of filing: **29.06.2018**

(51) Int Cl.:
***B01D 67/00*** (2006.01) ***B01D 69/02*** (2006.01)
***B01D 69/06*** (2006.01) ***B01D 71/68*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **3M Innovative Properties Company**
**Saint Paul, MN 55133-3427 (US)**

(72) Inventors:
- **Ansorge, Wolfgang**
**45136 Essen (DE)**
- **Matzeit, Niklas Martin**
**50733 Cologne (DE)**
- **Frost, Sven**
**45131 Essen (DE)**
- **Leismann, Ingmar**
**44137 Dortmund (DE)**

(74) Representative: **Hettstedt, Stephan**
**3M Deutschland GmbH**
**3M Office for Intellectual Property Counsel**
**Carl-Schurz-Strasse 1**
**41453 Neuss (DE)**

# (54) LOW PROTEIN BINDING POLYETHERSULFONE MICROFILTRATION MEMBRANES

(57) The present disclosure is related to a polymeric membrane having a first surface and a second surface and a wall extending between the first and second surface, the membrane comprising pores on the first and second surfaces and throughout the wall, the membrane comprising a modified surface, the modified surface comprising acrylate and/or methacrylate polymers and/or copolymers, wherein the modified surface extends at least over the first and/or the second surface, and over the pores of at least 50 % of the thickness of the wall. Furthermore, the present disclosure provides a method for producing such a membrane as well as a use of the membranes as disclosed herein for purification of aqueous media such as in biopharmaceutical applications.

EP 3 586 948 A1

## Description

### Field

The present disclosure relates to hydrophilic microporous polymeric flat sheet membranes. In addition, the present disclosure relates to a process for producing such membranes by modifying the surface of microporous membranes. The present disclosure further relates to use of such membranes for filtration and purification of liquid media.

### Background

Polymeric membranes such as aromatic polysulfones are widely used in industry as base material for micro- and ultrafiltration materials. In certain applications, it is desirable that the surface of the membranes is hydrophilic. For example, it may be desirable to obtain a low protein binding tendency. This may be the case in pharmaceutical applications such as filtration of media in biopharmaceutical processes where protein-containing solutions are processed.

In exemplary processes known in the art, the hydrophobic polyethersulfone (PES) is blended with hydrophilic polymers like polyvinylpyrrolidone (PVP), polyethyleneglycol (PEG) and sulfonated polyethersulfone (SPES) to render the membrane surface hydrophilic. However, leaching of the hydrophilic polymers out of the polymer matrix may lead to a decrease of the membrane hydrophilicity over time as well as to a contamination of the permeate stream. Accordingly, the scope and duration of the application of a certain membrane may be limited. On the one hand, this is relevant for applications where contamination of the filtrate with polymer compounds is generally undesired, which is particularly true for pharmaceutical processes. On the other hand, long-term hydrophilicity and thus high protein resistance is required to minimize the loss of target proteins (such as monoclonal antibodies), e.g. during the purification of biopharmaceuticals (e.g. sterile filtration).

Various efforts to fix hydrophilic polymers into a hydrophobic polymer matrix (such as a PES matrix) have been published. Similarly, it has been also tried to modify the PES membrane surface to obtain a certain hydrophilicity. For example, US 9,045,602 B2 discloses a method for producing a microporous membrane wherein a polymer is fixed by means of irradiation with an E-beam onto the surface of the membrane. This membrane is described as intended to be used in hemodialysis, virus filtration and sterile filtration.

US 5,468,390 describes the modification of an aryl polysulfone membrane using a photo-grafting process without the use of a photoinitiator. The membrane is UV-irradiated for a certain time at wavelengths of about 254 nm in the presence of hydrophilic vinyl monomers.

Similarly, US 6,852,769 B2 discloses a method to modify a polymeric photoactive sulfone membrane in an attempt to reduce protein fouling. The method comprises dipping the sulfone membrane into a solution containing hydrophilic monomers and a chain transfer agent and exposing the membrane to UV radiation in the presence of a filter.

Without wanting to diminish the efforts known from the prior art, there still exists a need in the art for hydrophilic membranes exhibiting long-term hydrophilicity and which do not leach hydrophilic monomers, and which are useful for various applications in micro- and nanofiltrations. Particularly desirable are hydrophilic membranes for biopharmaceutical applications. There also exists a need for a process for producing such membranes.

### Summary

The present disclosure provides a polymeric membrane having a first surface and a second surface and a wall extending between the first and second surface, the membrane comprising pores on the first and second surfaces and throughout the wall, the membrane comprising a modified surface, the modified surface comprising acrylate and/or methacrylate polymers and/or copolymers, wherein the modified surface extends at least over the first and/or the second surface, and over the pores of at least 50 % of the thickness of the wall.

The present disclosure further provides producing a membrane, comprising the steps

(i) Providing a polymeric membrane;
(ii) Placing the polymeric membrane into a solution comprising monomers selected from acrylates and/or methacrylates;
(iii) Irradiating the solution and the polymeric membrane with actinic radiation of wavelengths of greater than 290 nm.

Furthermore, the present disclosure relates to certain uses in applications in filtration applications of liquid media. These applications comprise the purification of biopharmaceuticals and chemical pharmaceuticals, water, blood and beverages.

## Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients are identified by % mole the amount of all ingredients gives 100% mole unless specified otherwise.

Unless explicitly indicated, all preferred ranges and embodiments may be combined freely.

Parameters as described herein may be determined as described in detail in the experimental section.

The present disclosure provides a polymeric membrane having a first surface and a second surface and a wall extending between the first and second surface, the membrane comprising pores on the first and second surfaces and throughout the wall, the membrane comprising a modified surface, the modified surface comprising acrylate and/or methacrylate polymers and/or copolymers, wherein the modified surface extends at least over the first and/or the second surface, and over the pores of at least 50 % of the thickness of the wall.

This structure, i.e. the combination of a modified surface comprising acrylate and/or methacrylate polymers and/or copolymers, wherein the modified surface extends at least over the first and/or the second surface, and over the pores of at least 50 % of the thickness of the wall, leads to a combination of features such as a hydrophilic surface of the porous membrane and low extractables. As a consequence, the membranes according to the present disclosure may exhibit low protein binding tendency. That is, the polymeric membranes according to the present disclosures having this unique combination of features are particularly suited for microfiltration and nanofiltration purposes where a hydrophilic surface and low extractables are important. This may be the case for applications in which protein containing solutions or dispersions are being filtered. These applications may comprise filtration of beverages or filtration in pharmaceutical or biopharmaceutical as well as medical applications.

Generally, the membranes according to the present disclosure are porous polymeric membranes selected from sulfone membranes, polyethylene membranes, polypropylene membranes and polyacrylonitrile membranes. Membranes selected from these materials generally exhibit desirable properties such as mechanical stability, chemical resistance as well as easy manufacturing according to processes well-established in the art. Polymeric sulfone membranes are preferably employed in the present disclosure due to their easy manufacture according to the processes as disclosed herein. Preferably, the sulfone polymer constituting the polymeric sulfone membrane is selected from polysulfone, polyethersulfone, polyphenylsulfone, polyarylethersulfone and polyarylsulfone, of which polyethersulfone (PES) and polysulfone are particularly preferred.

It is also preferred that the polymeric membrane further comprises at least one hydrophilic polymer. That is, for example, in addition to the comparatively hydrophobic sulfone polymer, the polymeric membrane may further comprise at least one hydrophilic polymer. This may increase the general hydrophilicity of the surface of the polymeric membrane, which is desirable for many applications. Preferably, the at least one hydrophilic polymer is selected from polyvinylpyrrolidone, polyethylenglycol, polyvinylalcohol, polyglycolmonoester, polysorbitate, carboxymethylcellulose or a modification or copolymer thereof, and any combinations and mixtures thereof. For example, a preferred and advantageous combination of hydrophilic polymer and sulfone polymer is polyvinylpyrrolidone and polyethersulfone polymer (PES). (For example, as the aromatic sulfone polymer in the context of the present disclosure, e.g. polysulfones, polyethersulfones, polyphenylene sulfones, polyarylethersulfones or copolymers or modifications of these polymers or mixtures of these polymers can be used. Preferably, the sulfone polymer is a polysulfone or a polyethersulfone with the repeating molecular units shown in formulas (I) and (II) as follows:

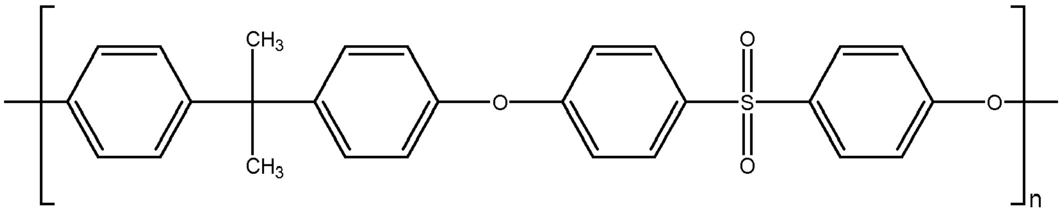

(I)

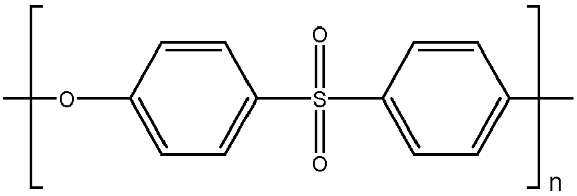

(II)

More preferably, a polyethersulfone according to formula (II) is used because this has lower hydrophobicity than, for example, the polysulfone.

Long-chain polymers are used advantageously as the hydrophilic second polymer that have a good compatibility with the hydrophobic sulfone polymer and have repeating polymer units that are in themselves hydrophilic. Preferred hydrophilic polymers have an average molecular weight $M_w$ of more than 10 000 Daltons. In the method according to the present disclosure, the polymers used as the hydrophilic second polymers have at the same time the function of increasing the viscosity of the homogeneous spinning solution, i.e. of functioning as a thickener, for which reason these polymers are also often called thickeners. In addition to this, these polymers function also as pore-forming agents or nucleating agents during the formation of the membrane structure. Preferably, the hydrophilic second polymer is polyvinylpyrrolidone, polyethylene glycol, polyvinyl alcohol, polyglycol monoester, polysorbitate, such as, e.g., polyoxyethylene sorbitan monooleate, carboxymethylcellulose, or a modification or a copolymer of these polymers. Polyvinylpyrrolidone is especially preferred. It is also possible to use mixtures of different hydrophilic polymers and, in particular, mixtures of hydrophilic polymers with different molecular weights, e.g., mixtures of polymers whose molecular weights differ by a factor of 5 or more. Preferably, the concentration of the hydrophilic second polymer in the membrane according to the present disclosure is in the range of from 0.5 to 7 wt.% relative to the weight of the membrane.

For the modification of the surface characteristics of the membranes according to the present disclosure, additives can be used that influence the stability of the membrane, the color, the ability to adsorb or absorb. There are also additives possible that control the charge of the membrane, e.g., that impart anionic or cationic character to the membrane. Preferably, the membrane according to the present disclosure further contains a hydrophilic third polymer that is different from the hydrophilic second polymer and is a hydrophilically modified aromatic sulfone polymer. Due to the presence of such a polymer, the permeability of the membrane as well as its adsorption characteristics are in particular favorably influenced and the membrane has permanent hydrophilic properties, which may manifest themselves in the fact that, among other things, the membrane can be repeatedly steam sterilized and its hydrophilic characteristics remain preserved, essentially unchanged, even after for example 30 sterilization cycles. Preferably, the hydrophilically modified aromatic sulfone polymer is present in the membranes as disclosed herein at a concentration in the range of from 1 to 50 wt.-% relative to the weight of the membrane, whereby the sum of the polymers yields 100 %. Thereby, in the method for producing the preferred membranes as disclosed herein, the polymer component further comprises a hydrophilic third polymer that is different from the hydrophilic second polymer and is a hydrophilically modified aromatic sulfone polymer. Preferably, the casting solution contains the hydrophilically modified aromatic sulfone polymer homogeneously dissolved at a concentration in the range of from 0.2 to 20 wt.-% relative to the weight of the casting solution

The hydrophilically modified aromatic sulfone polymer can be of a type in which hydrophilic functional groups are covalently bound to the sulfone polymer. It can also be a copolymer based on a sulfone polymer, in which hydrophilic segments are contained, for example a copolymer made from a sulfone polymer with a hydrophilic polymer like, e.g., polyvinylpyrrolidone or polyethylene glycol. For reasons of compatibility, it is of particular advantage, if the hydrophilically modified aromatic sulfone polymer is based on the hydrophobic first aromatic sulfone polymer, i.e., the membrane structure contains a mixture of a hydrophobic first aromatic sulfone polymer and a hydrophilic modification of this polymer. Good results may be achieved when the hydrophilically modified aromatic sulfone polymer is a sulfonated sulfone polymer, whereby this sulfonated sulfone polymer has preferably a degree of sulfonation in the range of from 3 to 10 %. Membranes according to the present disclosure that contain a combination of polyethersulfone and sulfonated polyethersulfone have particularly high permeabilities for water and proteins as well as a low tendency for adsorption, e.g. of proteins, and therefore a low tendency for fouling.

The polymeric membranes as described herein have a first and a second surface and a wall extending between the first and second surface as well as pores on the first and second surfaces and throughout the wall. Thus, the polymeric membranes are generally porous membranes and can either be flat sheet membranes or hollow-fibre membranes. Preferably, the membranes according to the present disclosure are flat sheet membranes.

The membranes according to the present disclosure comprise a modified surface. The modified surface comprises acrylate and/or methacrylate polymers and/or copolymers. The acrylate and/or methacrylate polymers and/or copolymers are preferably obtained from monomers selected from monoacrylates, diacrylates, triacrylates, tetraacrylates, hexaacrylate, hexaacrylates, monomethacrylates, dimethacrylates, trimethacrylates and/or tetramethacrylates, pentamethacrylates, hexamethacrylates and any combinations thereof. Acrylates and methacrylates suitable for modification of sulfone polymer surfaces are generally known in the art and may be branched or unbranched and/or carry other functional moieties. Preferably, the acrylate is selected from hydroxypropyl acrylate, hydroxyethyl acrylate, the diacrylate is selected from diethylene glycol diacrylate, triethylene glycol diacrylate, tetraethylene glycol diacrylate, pentaethylene glycol diacrylate, the methacrylate is selected from 2-hydroxyethyl methacrylate, and the dimethacrylate is selected from diethylene glycol dimethacrylate, triethylene glycol diemethacrylate, tetraethylene glycol dimethacrylate, pentaethylene glycol dimethacrylate, and polyethylene glycol diacrylate.

Exemplary monomers which may advantageously used in the present disclosure are hydroxypropyl acrylate (HPA), hydroxyethyl acrylate (HEA), tetraethylene glycol diacrylate (TEGDA), 2-hydroxyethyl methacrylate (HEMA), tetraethylene glycol dimethacrylate (TEGDMA), poly(ethylene glycol) methacrylate (PEGMA), poly(ethylene glycol methylether) methacrylate (PEGMEMA), 2-(methacryloxy)ethyl)-dimethyl-(3-sulfopropyl)-ammoniumhydroxid (SBMA), dimethylaminoethyl methacrylate (DMAEMA), diacetoneacrylamide (DAAM) and polyethylene glycol di(meth)acrylate. Polyethylene glycol di(meth)acrylate may comprise ethyleneglycol units of different molecular weights, e.g. total molecular weight $M_n$ in the range of from 200 to 10,000. As appreciated by the skilled person, this list is only illustrative and not comprehensive. For example, the monomers may be selected from monoacrylates and monomethacrylates. In another example, the monomers may be selected from diacrylates and dimethacrylates. In yet another example, the monomers may comprise at least one monoacrylate and at least one diacrylate, triacrylate, tetraacrylate, pentaacrylate and/or hexaacrylate. In this regard, di- and in particular tri- and tetra(meth)acrylates may act as crosslinkers to the mono(meth)acrylates. The monomers may also comprise at least one monomethacrylate and at least one dimethacrylate, trimethacrylate and/or tetramethacrylate. Also, the monomers may comprise at least one monoacrylate and at least one dimethacrylate, trimethacrylate,tetramethacrylate. pentamethacrylate and/or hexamethacrylate. It is preferred that the monomers comprise at least one mono(meth)acrylate, at least one di(meth)acrylate, at least one tri(meth)acrylate, at least one tetra(meth)acrylate, at least one penta(meth)acrylate and/or at least one hexa(meth)acrylate. Furthermore, the monomers may comprise at least one monomethacrylate and at least one diacrylate, triacrylate and/or tetraacrylate. Similarly, the monomers may comprise at least one monomethacrylate, at least one diacrylate and at least one dimethacrylate. In addition, the monomers may comprise at least one monoacrylate, at least one monomethacrylate, at least one diacrylate and at least one dimethacrylate. In this regard, it is preferred that the ratio between the at least one monoacrylate and/or the at least one methacrylate on one side and the at least one diacrylate, triacrylate and/or tetraacrylate and/or the at least one dimethacrylate, trimethacrylate and/or tetramethacrylate on the other side is in the range of from 20:1 to 1:1, preferably in the range of from 15:1 to 2:1, more preferably in the range of from 12:1 to 5:1.

The modified surface of the polymeric membranes as disclosed herein extends over the first and/or second surface, and over the walls and pores throughout the wall of at least 50 %, preferably of at least 60 %, more preferably of at least 70 % and even more preferably of at least 80 % of the thickness of the wall, starting from the first surface and/or the second surface. That is, the modified surface as described herein does not only cover the first or second surface of the polymeric membrane, but also extends into the pores of the wall between those surfaces. This has the advantage that a larger part of the total surface of the porous membrane is covered by the modified surface. The larger the part of the total surface of the porous membrane is covered by the modified surface, the more pronounced the advantages with regard to increased hydrophilicity, decreased protein adsorption and decreased level of extractables of the membrane. Thus, it is preferred that the modified surface extends over the pores throughout the wall over a thickness of at least 50 %, preferably of at least 60 %, more preferably of at least 70 % and even more preferably of at least 80 % of the thickness of the wall, or of a thickness greater than 35 $\mu$m, preferably greater than 50 $\mu$m, more preferably greater than 75 $\mu$m, and even more preferably greater than 95 $\mu$m of the thickness of the wall, starting from the first surface and/or from the second surface. For example, in the case of a flat sheet membrane, the modified surface extends over the first surface and over the pores throughout the wall of at least 50 %, preferably of at least 60 %, more preferably of at least 70 % and even more preferably of at least 80 % of the thickness of the wall, or of at least 25 $\mu$m of the thickness of the wall, preferably greater than 35 $\mu$m, preferably greater than 50 $\mu$m, more preferably greater than 75 $\mu$m, and even more preferably greater than 95 $\mu$m of the thickness of the wall, starting from the first surface. In this regard, it is preferred that the modified surface extends over at least 5 %, preferably at least 10 %, more preferably at least 20 %, and even more preferably at least 30 % of the second surface.

More preferably, the modified surface may extend over the first surface, over the pores throughout the complete

thickness of the wall, and over at least part of the second surface of the wall. For example, in the case of a commonly used porous PES flat-sheet membrane having a thickness of about 110 μm, the modified surface may extend over the first and second surfaces as well as over the complete thickness of the wall extending between the first and second surfaces.

The modification of the surface may be identified by means of ATR-IR analysis as described in more detail in the experimental section. For example, the absorbance of the C=O stretch vibration (e.g. at 1725 $cm^{-1}$) representing the polymethacrylates on the membrane first and/or second surfaces may be detected. This may also be compared to a corresponding membrane without a modified surface. For instance, if a flat sheet membrane was modified by irradiating it from the side of the first surface, and ATR-IR detects that also the second surface or at least part of it has been modified, then it is evident that also the surfaces of the pores extending on the complete thickness of the wall between the first and second surfaces has been modified. Thus, ATR-IR detection represents a direct method for determination of modification of the first and second surfaces, and allows for an indirect determination of the extend of the modified surface of the pores in the wall between the first and second surfaces. In addition, modification of the surface as described herein may be determined via a combination of microtome and IR-microscopy.

The modified surface comprise acrylate and/or methacrylate polymers and/or copolymers as described herein is preferably obtained by grafting the copolymers and polymers from the polymeric surface by irradiation by actinic radiation having wavelengths greater than 290 nm, preferably greater than 300 nm, more preferably greater than 310 nm Using wavelengths greater than 300 nm has the effect of effectively grafting copolymers and polymers as described herein not only onto the first and second surfaces of the porous polymeric membranes, but also over the pores in the wall between the first and second surface. That is, the surface of the pores in the wall is also modified into a certain depth or, dependent from the thickness of the membrane, throughout the complete thickness of the membrane. This more complete modification of the total surface of a membrane represents a significant advantage compared to modified membranes according to the state of the art. Using actinic radiation of lower wavelengths may lead to only superficial modification of either first or second surfaces. On the other hand, using wavelengths greater than 550 nm is probably not be able to lead to sufficient grafting. Preferably, the irradiation with actinic radiation is carried out at wavelengths in the range of from 315 to 350 nm.

The pore diameters of the first and second major surfaces may also be determined by visual analyzation of SEM pictures of the surfaces. The same magnifications may be used as described for the surface porosity. From the pore diameters obtained, the average pore diameters are determined as known in the art.

Accordingly, the present disclosure further provides a method for modifying the surface of a polymeric membrane, comprising the steps

(i) Providing a polymeric membrane;
(ii) Applying a solution comprising monomers selected from acrylates and methacrylates and any combinations thereof to the membrane;
(iii) Irradiating the membrane with actinic radiation having wavelengths greater than 290 nm.

Using monomers as described herein and irradiating the membrane at wavelengths greater than 290 nm, preferably of greater than 300 nm has the effect that the surface of the polymeric membrane gets modified, i.e. the monomers polymerize and/or get grafted onto the polymeric membrane surface. Formation of the modified surface gives rise to a certain weight gain of the membrane. This weight gain may be determined as described in the experimental section.

The polymeric membrane is preferably selected from polymer sulfone membranes and polyvinylidene fluoride membranes as described herein. The same applies to the monomers which have also already described above. The solvent in the solution comprising the monomers as described herein preferably comprises water. Preferably, the solvent comprises water and may further comprise at least one further solvent. The at least one further solvent may be selected from the list consisting of alcohols such as methanol, ethanol and propanol (both iso-propanol and neopropanol) as well as butanol, pentanol and hexanol, halogenated solvents such as dichloromethane, ethers such as diethylether,esters such as ethylacetate and ketones such as acetone and butanone (methylethyl ketone). It is preferred that the solvent is water, preferably deionized water since this may yield the best reproducible results. Preferably, the solution contains the monomers in an amount of at least 1 wt.-%. Lower amounts would result in a slow weight gain during irradiation in the subsequent step, which is not desirable from a process economy in an industrial scale. It is also preferred that the solution contains the monomers in an amount of not higher than 20 wt.-%. Higher amounts may not necessarily lead to a higher weight gain, but may also lead to undesired side reactions. An adversary effect of using higher amounts may be, e.g., water permeation of the membrane reduced to low levels undesired or even unsuitable for many applications of the membrane. Moreover, it was found that above this amounts no further benefit with regard to protein binding properties of the modified membrane existed. In this regard, it is preferred that the solution contains the monomers in an amount in the range of from 1 to 20 wt.-%, preferably in the range of from 2 to 18 wt.-%, more preferably in the range

of from 4 to 16 wt.-%.

"Applying the solution" comprising the monomers as described herein may be carried out by spraying the solution onto the membrane or immersing the membrane in a vessel containing the solution. Preferably, the vessel is a shallow vessel and is suitable for transmitting the actinic irradiation of corresponding wavelengths as described herein. In this regard, it is preferred that the vessel is shallow so that the membrane is immersed in the solution and covered by the solution containing the monomers. Diptrays and tablets are preferred examples.

In step (iii), irradiation with actinic radiation having wavelengths greater than 290 nm, preferably of greater than 300 nm is carried out. Irradiating with wavelengths greater than 290 nm, preferably of greater than 300 nm has the effect that not only the surface of the membrane facing the source of irradiation is modified, rather, modification of the surface of the pores extends into the thickness of the membrane and even to the side facing away from the source of irradiation. Using actinic radiation of lower wavelengths may lead to only superficial modification of either first or second surfaces. On the other hand, using wavelengths greater than 550 nm is probably not be able to lead to sufficient grafting. Preferably, the irradiation with actinic radiation is carried out at wavelengths in the range of from 315 to 350 nm. Source of irradiation may be a UV-lamp as commercially available, which may be combined with one or more filter(s) in order to obtain the irradiation at the desired wavelengths. These devices and their combination and application are well known to the skilled person. The dose of actinic irradiation also influences the modification of the membrane surface with acrylate and methacrylate monomers. For example, weight gain is influenced. A higher dose would give rise to higher weight gain, i.e. more (meth)acrylate monomers are polymerized or grafted onto the membrane surface. Preferably, treatment with actinic irradiation is carried out with an irradiation dose of a mean value of at least 1 $J/cm^2$. Lower doses were found to yield low surface modification and low weight gain ratios, which is undesirable for manufacturing on industrial scale. Low surface modification also translates in lower hydrophilicity and higher protein binding and may also yield higher extractables, which is also not desirable. On the other hand, while higher doses furnish more surface modification in terms of higher weight gain by grafted (meth)acrylate, this may also affect water permeability of the modified membrane. In addition, for higher doses, no further increase of hydrophilicity (i.e. decreased protein binding) may be found. Accordingly, it is preferred that the treatment with actinic irradiation is carried out with an irradiation dose of a mean value of not higher than 17 $J/cm^2$. Preferably, treatment with actinic irradiation is carried out with an irradiation dose of a mean value in the range of from 1 to 17 $J/cm^2$, preferably in the range of from 3 to 15 $J/cm^2$, more preferably in the range of from 5 to 13 $J/cm^2$, even more preferably in the range of from 7 to 11 $J/cm^2$. The doses in the preferred ranges may be achieved by correspondingly actuating the source of irradiation. This may be a commonly known UV irradiation lamp. Alternatively, the membrane and the monomer solution applied thereto may be moved in relation to the source of irradiation at a certain constant speed. For example, the membrane may be placed onto a conveyor belt and then moved under a fixed UV lamp at a certain speed, resulting in a certain residual time of the membrane under the lamp and consequently in the desired dose. In this regard, the side of the membrane as described herein facing the irradiation source in the process according to the present disclosure may be called "first side", the side of the membrane facing away the irradiation source may be called "second side" of the membrane. While it is preferred for practical reasons that irradiation is affected only onto one side of a membrane (i.e. the "first side"), irradiation may also be affected onto the other side of the membrane (i.e. the "second side").

The irradiation step (iii) in the method according to the present disclosure may be carried out at ambient conditions. This is advantageous for manufacturing on industrial scale since no additional measures such as cooling, heating or protective atmosphere are necessary, resulting in a resource-efficient process.

Preferably, the method according to the present disclosure comprises an additional step (iv) subjecting the membrane obtained in step (iii) to an extracting step to remove residual solvents and additives. Preferably, this extracting step comprises subjecting the membrane to at least one extraction bath. For practical reason, it is preferred that at least one extraction bath comprises water even consists of water. Preferably, the at least one extraction bath may be at ambient temperature, but may also be tempered to a temperature in the range of 20 to 100 °C, preferably in the range of from 25 to 90 °C, more preferably in the range of from 30 to 80 °C.

Similarly, it is preferred that the method as described herein comprises a further step (v) drying the membrane. Drying has the common meaning in the art, i.e. the removal of solvent, in particular water, from the membrane surfaces and/or the membrane pores. Preferably, drying in step (v) comprises exposing the membrane to air having a temperature in the range of from 25 to 120 °C, preferably in the range of from 35 to 105 °C, and more preferably in the range of from 45 to 95 °C. Means and methods for drying membranes, in particular flat-sheet membranes by exposing the membrane to air having temperatures in the preferred ranges, are known in the art to the skilled person.

Due to the unique combination of properties of the membranes as described herein, preferably obtained from the method as described herein, the present disclosure further provides a use of the membranes as described herein for filtration processes. This may involve microfiltration, nanofiltration or even ultrafiltration. "Microfiltration", "Nanofiltration" and "ultrafiltration" have the meaning common in the art. Preferably, the use as described herein comprises purification of liquid media, in particular aqueous media. Preferably, the use as described herein may comprise filtration of beverages such as wine or beer, the clarification of vinegar, but also pharmaceutical, biopharmaceutical or even medical

applications. Preferred uses are hemodialysis, virus filtration, and sterile filtration.

**Description of figures**

Fig. 1: Figure 1 depicts an ATR-IR-spectrum of an UV-modified PES-based microfiltration membrane according to ex. 14 of the present disclosure (surface modified with a solution of 6 % HPA/0.6 % TEGDA at an irradiation set forth in the experimental section at a dose of 11 J/cm$^2$) vs. an ATR-IR spectrum of an unmodified MicroPES sample (ex 3M).

Fig. 2: Figure 2 shows zeta-potentials of ex. 7, 9 and 11 as well as of comp. ex. 1. It shows that the larger the amount of polyacrylate applied to the membrane surface, the higher the gradient of the graphs. That means that the stronger the surface modification of a membrane with polyacrylates, the faster the zeta-potential rises to the neutral 0 mV line. Without wanting to be bound by theory, it may be assumed that the PEG-polyacrylate layer adsorbs more water and shields the basis PES membrane. It may be further assumed that this may also be the reason for the lower protein adsorption of the modified membranes as disclosed herein.

The present disclosure may further be exemplified by the following items:

Item 1: A polymeric membrane having a first surface and a second surface and a wall extending between the first and second surface, the membrane comprising pores on the first and second surfaces and throughout the wall, the membrane comprising a modified surface, the modified surface comprising acrylate and/or methacrylate polymers and/or copolymers, wherein the modified surface extends at least over the first and/or the second surface, and over the pores of at least 50 % of the thickness of the wall.

Item 2: The polymeric membrane according to item 1, wherein the polymeric membrane is selected from polymeric sulfone membranes, polyethylene membranes, polypropylene membranes and polyacrylonitrile membranes.

Item 3: The polymeric membrane according to item 2, wherein the polymeric membrane is a polymeric sulfone membrane.

Item 4: The polymeric membrane according to any one of the preceding items, wherein the acrylate and/or methacrylate polymers and/or copolymers are obtained from monomers selected from at least one mono(meth)acrylate and at least one di(meth)acrylate, tri(meth)acrylate, tetra(meth)acrylate, penta(meth)acrylate and/or hexa(meth)acrylate and any combinations thereof.

Item 5: The polymeric membrane according to any one of the preceding items, wherein the copolymers and polymers are grafted to the polymeric sulfone in the modified surface by irraditation with actinic raditation having wavelengths greater than 290 nm, preferably greater than 300 nm

Item 6: The polymeric membrane according to item 5, wherein the actinic radiation have wavelengths in the range of from 315 to 350 nm.

Item 7: The polymeric membrane according to item 4 or item 5, wherein the treatment with actinic irradiation is carried out an irradiation dose of a mean value in the range of from 1 to 17 J/cm$^2$, preferably in the range of from 3 to 15 J/cm$^2$, more preferably in the range of from 5 to 13 J/cm$^2$, even more preferably from 7 to 11 J/cm$^2$.

Item 8: The polymeric membrane according to any one of the preceding items, wherein the polymeric sulfone is selected from polysulfone, polyethersulfone, and polyarylsulfone.

Item 9: The polymeric membrane according to item 7, wherein the polymeric sulfone is polyethersulfone.

Item 10: The polymeric membrane according to any one of the preceding items, wherein the membrane is a hydrophilic membrane.

Item 11: The polymeric membrane according to any one of the preceding items, wherein the monomers are selected from at least one monoacrylate and/or at least one monomethacrylate and at least one diacrylate and/or at least

one dimethacrylate.

Item 12: The polymeric membrane according to item 10, wherein the monomers comprise at least one monoacrylate and at least one diacrylate.

Item 13: The polymeric membrane according to item 10, wherein the monomers comprise at least one monomethacrylate and at least one dimethacrylate.

Item 14: The polymeric membrane according to item 10, wherein the monomers comprise at least one monoacrylate and at least one dimethacrylate.

Item 15: The polymeric membrane according to item 10, wherein the monomers comprise at least one monoacrylate, at least one dimethacrylate and at least one diacrylate.

Item 16: The polymeric membrane according to item 10, wherein the monomers comprise at least one monomethacrylate and at least one diacrylate.

Item 17: The polymeric membrane according to item 10, wherein the monomers comprise at least one monomethacrylate, at least one diacrylate and at least one dimethacrylate.

Item 18: The polymeric membrane according to item 10, wherein the monomers comprise at least one monoacrylate, at least one monomethacrylate, at least one diacrylate and at least one dimethacrylate.

Item 19: The polymeric membrane according to item 10, wherein the ratio between the at least one monoacrylate and/or the at least one monomethacrylate on one side and the at least one diacrylate and/or the at least one dimethacrylate on the other side is in the range from from 20:1 to 1:1, preferably in the range of from 15:1 to 2:1, more preferably in the range of from 12:1 to 5:1.

Item 20: The polymeric membrane according to item 10 or item 18, wherein the monomers comprise hydroxypropyl acrylate.

Item 21: The polymeric membrane according to item 10, item 15 or item 18, wherein the monomers comprise hydroxypropyl acrylate and tetraethylene glycol diacrylate.

Item 22: The polymeric membrane according to item 10, item 12 or item 18, wherein the monomers comprise 2-hydroxy methacrylate and tetraethylene glycol dimethacrylate.

Item 23: The polymeric membrane according to item 10 or item 18, wherein the monomers comprise polyethylene glycol diacrylate.

Item 24: The polymeric membrane according to any one of the preceding items, wherein the polymeric membrane is a flat sheet membrane.

Item 25: The polymeric membrane according to any one of the preceding items, wherein the polymeric membrane is a hollow fibre membrane.

Item 26: The polymeric membrane according to any one of the preceding items, wherein the acrylate is selected from hydroxypropyl acrylate, the diacrylate is selected from diethylene glycol diacrylate, triethylene glycol diacrylate, tetraethylene glycol diacrylate, pentaethylene glycol diacrylate, the methacrylate is selected from 2-hydroxyethyl methacrylate, and the diemethacrylate is selected from diethylene glycol dimethacrylate, triethylene glycol diemethacrylate, tetraethylene glycol dimethacrylate, pentaethylene glycol dimethacrylate, and polyethylene glycol diacrylate.

Item 27: The polymeric membrane according to any one of the preceding items, wherein the polymeric membrane exhibits an adsorption of the protein IgG as described in the experimental section of less than 30 $\mu g/cm^2$, preferably of less than 25 $\mu g/cm^2$, more preferably of less than 20 $\mu g/cm^2$, even more preferably of less than 15 $\mu g/cm^2$.

Item 28: A method for modifying the surface of a polymeric membrane, comprising the steps

(i) Providing a polymeric membrane;
(ii) Applying a solution comprising monomers selected from acrylates and methacrylates and any combinations thereof to the membrane;
(iii) Irradiating the membrane with actinic radiation having wavelengths greater than 290 nm.

Item 29: The method according to item 29, wherein irradiating with actinic radiation is carried out an irradiation dose of a mean value in the range of from 1 to 17 J/cm$^2$, preferably in the range of from 3 to 15 J/cm$^2$, more preferably in the range of from 5 to 13 J/cm$^2$, even more preferably from 7 to 11 J/cm$^2$.

Item 30: The method according to item 28 or item 29, wherein irradiating with actinic irradiation is carried out at wavelengths greater than 300 nm, preferably at least 315 nm.

Item 31: The method according to item 29 or item 30, wherein the actinic radiation is carried out at wavelengths in the range from 315 to 350 nm.

Item 32: The method according to any one of items 28 to 31, wherein the polymeric membrane is selected from polymeric sulfone membranes, polyethylene membranes, polypropylene membranes and polyacrylonitrile membranes.

Item 33: The method according to any one of items 28 to 32, wherein the polymeric membrane is selected from polymeric sulfone membranes.

Item 34: The method according to item 33, wherein the polymeric sulfone is selected from polysulfone, polyethersulfone, and polyarylsulfone.

Item 35: The method according to any one of items 29 to 34, wherein the monomers are selected from at least one monoacrylate and/or at least one monomethacrylate and at least one diacrylate and/or at least one dimethacrylate.

Item 36: The method according to item 35, wherein the monomers comprise at least one monoacrylate and at least one diacrylate.

Item 37: The method according to item 35, wherein the monomers comprise at least one monomethacrylate and at least one dimethacrylate.

Item 38: The method according to item 35, wherein the monomers comprise at least one monoacrylate and at least one dimethacrylate.

Item 39: The method according to item 35, wherein the monomers comprise at least one monoacrylate, at least one dimethacrylate and at least one diacrylate.

Item 40: The method according to item 35, wherein the monomers comprise at least one monomethacrylate and at least one diacrylate.

Item 41: The method according to item 35, wherein the monomers comprise at least one monomethacrylate, at least one diacrylate and at least one dimethacrylate.

Item 42: The method according to item 35, wherein the monomers comprise at least one monoacrylate, at least one monomethacrylate, at least one diacrylate and at least one dimethacrylate.

Item 43: The method according to item 35, wherein the ratio between the at least one monoacrylate and/or the at least one monomethacrylate on one side and the at least one diacrylate and/or the at least one dimethacrylate on the other side is in the range from from 20:1 to 1:1, preferably in the range of from 15:1 to 2:1, more preferably in the range of from 12:1 to 5:1.

Item 44: The method according to item 35 or item 43, wherein the monomers comprise hydroxypropyl acrylate.

Item 45: The method according to item 35, item 40 or item 43, wherein the monomers comprise hydroxypropyl acrylate and tetraethylene glycol diacrylate.

Item 46: The method according to item 35, item 37 or item 43, wherein the monomers comprise 2-hydroxy methacrylate and tetraethylene glycol dimethacrylate.

Item 47: The method according to item 35 or item 43, wherein the monomers comprise polyethylene glycol diacrylate.

Item 48: The method according to item 35, wherein the acrylate is selected from hydroxypropyl acrylate, the diacrylate is selected from diethylene glycol diacrylate, triethylene glycol diacrylate, tetraethylene glycol diacrylate, pentaethylene glycol diacrylate, the methacrylate is selected from 2-hydroxyethyl methacrylate, and the diemethacrylate is selected from diethylene glycol dimethacrylate, triethylene glycol diemethacrylate, tetraethylene glycol dimethacrylate, pentaethylene glycol dimethacrylate, and polyethylene glycol diacrylate.

Item 49: Use of the polymeric membrane according to any one of items 1 to 27 for purification of liquid media, in particular aqueous media.

Item 50: The use according to item 49, wherein the use comprises filtration of beverages such as wine or beer and the clarification of vinegar.

Item 51: The use according to item 49, wherein the use comprises pharmaceutical, biopharmaceutical or medical applications.

Item 52: The use according to item 51, wherein the use is selected from hemodialysis, virus filtration, and sterile filtration.

## Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

Volume porosity:

A sample of at least 0.5 g of the membrane to be examined is dry weighed. The membrane sample is subsequently placed in a liquid that moistens the membrane material, however without causing swelling, for 24 hours such that the liquid penetrates into all pores. For the present polyamide membranes, a silicone oil with a viscosity of 200 mPa s at 25 °C (Merck) is used. The permeation of liquid into the membrane pores is visually discernable in that the membrane sample changes from an opaque to a glassy, transparent state. The membrane sample is subsequently removed from the liquid, liquid adhering to the membrane sample is removed by centrifuging at approx. 1800 g, and the mass of the thus pretreated wet, i.e. liquid-filled, membrane sample is determined by weighing.
The volume porosity ε is determined according to the following formula:

$$\text{Volume porosity } \varepsilon = \frac{(m_{wet} - m_{dry})/\rho_{liquid}}{(m_{wet} - m_{dry})/\rho_{liquid} + m_{dry}/\rho_{polymer}}$$

where:

$m_{dry}$ = weight of the dry membrane sample after wetting and drying [g]
$m_{wet}$ = weight of the wet, liquid-filled membrane sample [g]
$\rho_{liquid}$ = density of the liquid used [g/cm$^3$]
$\rho_{polymer}$ = density of the membrane polymer [g/cm$^3$]

Maximum separating pore:

The diameter of the maximum separating pore is determined by means of the bubble point method (ASTM No.

128-99 and F 316-03), for which the method described in DE-A-36 17 724 is suitable. Thereby, $d_{max}$ results from the vapor pressure $P_B$ associated with the bubble point according to the equation

$$d_{max} = \sigma_B / P_B$$

where $\sigma_B$ is a constant that is primarily dependent on the wetting liquid used during the measurement. For IPA, $\sigma_B$ is 0.61 $\mu$m·bar at 25°C.

Determination of the transmembrane flow (water permeability)

Disc-shaped membrane samples are stamped out of the membrane to be tested and then clamped fluid-tight at the perimeter in a suitable sample holder such that a free measuring area of 43.2 $cm^2$ results. The sample holder is located in a housing that can be penetrated under pressure by water. The clamped membrane sample is then penetrated, from the side on which the surface of the membrane with the smaller pores is located, by deionized water conditioned to 25°C at a defined pressure between 0.1 and 0.2 bar. The water volume that flows through the membrane sample during a measuring period of 60 s is determined gravimetrically or volumetrically.

The transmembrane flow, TMF, is determined according to formula (III)

$$TMF \left[\frac{l}{m^2 \cdot h \cdot bar}\right] = \frac{V_W}{\Delta t \cdot A_M \cdot \Delta p} \cdot 600 \qquad (III)$$

where:

$V_w$ = volume of water [ml] flowing through the membrane sample during the measuring period
$\Delta t$ = measuring time [min]
$A_M$ = area of the membrane sample penetrated (43.2 $cm^2$)
$\Delta p$ = pressure set during the measurement [bar]

Weight Gain

The weight gain of each sample after performing UV-grafting is calculated according to the following formula:

Weight gain = (Weight after grafting – Weight before grafting)/Weight before grafting) x 100

The weight gain value represents the amount of Poly(meth)acrylate grafted on the membrane surface.

Water Permeability Test and determination of the water permeability reduction

The water permeability was measured with a custom-made setup using deionized water. The membrane samples were cut in 43.2 $cm^2$ circles and the roll side (shiny side) was used as upstream side. Measurements were performed at a transmembrane pressure of 0.6 bar at a temperature of 25 °C. The permeate volume was recorded as a function of time for each sample.

The water permeability reduction is defined as:

Water permeability reduction = ((TMF before UV grafting – TMF after UV grafting)/(TMF before UV grafting)) x 100

Protein Binding Test

Protein adsorption tests were conducted in phosphate buffered saline (PBS, *SigmaAldrich Co. LLC*) using the model protein IgG (from human blood, ≥ 99 %, *SigmaAldrich Co. LLC*) at pH 7.4. The membrane samples (circles, 1 cm in diameter) were placed on a microwell plate and immersed in the IgG solution (4 g/L) for one hour on a shaker. Afterwards the protein solution was removed and the samples were washed with PBS buffer three times. Afterwards the amount of surface-bound IgG was determined with the help of the Pierce BCA protein assay kit (*Thermo Fisher Scientific Inc*., Waltham/USA). The BCA assay contains of bichincinonic acid and copper(II)sulfate, the reaction of the surface-bound protein with the copper(II)-complex leads to the formation of a distinct copper(I)-complex which can be photometrically detected at 562 nm.

Extraction

A harsh extraction test in deionized water/ethanol (70/30) for 4 hours at 60 °C was used to test the durability of the surface modification. The samples were immersed in that solution and dried in the oven at 60 °C overnight afterwards.

Zeta-potential analysis

The Zeta-potential of a membrane surface is a measure of its surface charge at the solid/fluid interface and was measured with the SurPass electrokinetic analyzer from Anton Paar (Graz, Austria). After cutting the membrane samples into two 20 x 10 mm pieces they were attached to both sample holders of the Adjustable Gap Cell with a double-sided adhesive tape. The gap height between the two samples holders was adjusted to 0.1 μm to form a streaming channel. After filling the system with $10^{-3}$ mol/L potassium chloride solution a pH titration was performed with 0.05 mol/L sodium hydroxide solution starting at pH 3. Then the pH was stepwise increased to 8. The Zeta-potential at each pH step was calculated according to Helmholtz-Smoluchowski equation:

$$\zeta = (DI/DP) \times (\eta/\varepsilon_0\,\varepsilon) \times (L/Q)$$

with: $\zeta$ = Zeta-potential, DI/DP = slope of the streaming current against the pressure across the streaming channel, $\varepsilon_0$ = vacuum permittivity, $\varepsilon$ = dielectric constant of the electrolyte solution, L = length of the streaming channel and Q = cross-section of the streaming channel.

UV-Grafting Procedure

All experiments were performed with MicroPES 2F microfiltration flat-sheet membranes (obtained from 3M). UV-irradiation trials were conducted with a Lighthammer LH-6 system from *Heraeus GmbH*, Hanau/Germany. Two "D"-Bulbs having an UV emission spectrum of between 250 and 380 nm were used. PET filters were employed such that only wavelengths greater than 315 nm could reach the membrane surface. The two "D"-Bulbs were placed behind each other to achieve UV-A doses up to 11 J/cm$^2$.

Table 1: Overview of some of the (meth)acrylic monomers used for the UV-grafting experiments.

| **Chemical name** | **Purity / %** | **Chemical structure** |
|---|---|---|
| Hydroxypropyl acrylate, mixture of isomers (HPA) | 95 | 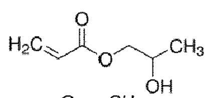 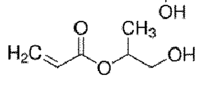 |
| Tetraethylene glycol diacrylate (TEGDA) | ≥ 87 | 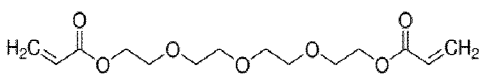 |

(continued)

| Chemical name | Purity / % | Chemical structure |
|---|---|---|
| 2-Hydroxyethyl methacrylate (HEMA) | 97 | 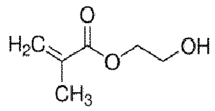 |
| Tetraethylene glycol dimethacrylate (TEGDMA) | 95 | 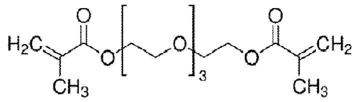 |
| Polyethylene glycol diacrylate, $M_n$ = 700 (PEG-Diacrylate) | ≥ 92 | 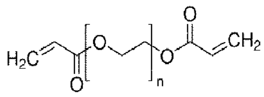 |

The membrane samples were cut into 18 x 25.4 cm pieces and stored in a Polyethylene (PE)-bag. The general procedure for sample surface modification is described as follows. The monomer solution was prepared by dissolving the required amount of pure monomer in deionized water. Afterwards the membrane sample was taken out of the PE-bag and immersed in the aqueous monomer solution and placed on a glass plate afterwards. A 50 μm thick PET (Polyethylene terephthalate) film (Hostaphan GN 50 4600 A from Mitsubishi) was used to cover the sample and the excess solution was squeezed out with the help of a rubber roller. For every experiment the roll side (shiny side) of the membrane was facing the PET film and the air side (matte side) of the membrane was facing the glass plate. Then the sample sandwich was transferred to the conveyor belt of the Lighthammer system and the sample passed the two UV-"D"-Bulbs. After UV irradiation, the samples were washed three times with deionized water for 15 min each and then dried in an oven (30 min at 100 °C). Afterwards the samples were ready for further characterization and were stored in PE-bags again.

Table 2 shows the respective UV-A energies for every conveyor belt speed. These values were determined with the UV Power PUK II from *EIT LLC*, Leesburg/USA.

Table 2: Applied UV-A doses for the grafting experiments

| **Conveyor belt speed / m/min** | **Mean value UV-A dose / J/cm$^2$** | **Mean value UV intensity mW/cm$^2$** |
|---|---|---|
| 1.70 | 7.0 | 4500 |
| 2.75 | 11.0 | 4500 |

Table 3: Ex.1 to 6 and Comp. Ex. 1

| No. | Mean value UV-A dose [J/cm$^2$] | Monomer (HEMA) concentration in grafting solution [%] |
|---|---|---|
| Ex. 1 | 11 | 12 |
| Ex. 2 | 7 | 12 |
| Ex. 3 | 11 | 6 |
| Ex. 4 | 7 | 6 |
| Ex. 5 | 11 | 1 |
| Ex. 6 | 7 | 1 |
| Comp. Ex. 1 | Unmodified MicroPES 2F membrane | |

Table 4: Ex. 7 to 12 and Comp. Ex. 1

| No. | Mean value UV-A dose [J/cm$^2$] | Monomer (PEG-diacrylate) concentration in grafting solution [%] |
|---|---|---|
| Ex. 7 | 11 | 12 |
| Ex. 8 | 7 | 12 |
| Ex. 9 | 11 | 6 |
| Ex. 10 | 7 | 6 |
| Ex. 11 | 11 | 1 |
| Ex. 12 | 7 | 1 |
| Comp. Ex. 1 | Unmodified MicroPES 2F membrane | |

Weighing the membrane samples before and after the UV grafting procedure results in the weight gains as shown in Table 5 below:

Table 5: Weight gains of Ex. 1 to 12 after performing the UV grafting procedure

| No. | Weight gain [%] |
|---|---|
| Ex. 1 | 3.5 |
| Ex. 2 | 1.7 |
| Ex. 3 | 2.3 |
| Ex. 4 | 1.2 |
| Ex. 5 | 1.1 |
| Ex. 6 | 1.1 |
| Ex. 7 | 11.8 |
| Ex. 8 | 9.0 |
| Ex. 9 | 5.1 |
| Ex. 10 | 4.1 |
| Ex. 11 | 1.2 |
| Ex. 12 | 0.8 |

The weight gain corresponds to the grafted amount of polyacrylate after UV irradiation.

Protein binding, i.e. IgG binding and water permeability reduction were determined for Ex. 1 to 12 as well as Comp. Ex. 1. Binding tests were also conducted after the extraction tests have been carried out. The results are summarized in table 6.

Table 6: Results of IgG binding tests before and after extraction.

| No. | IgG binding [$\mu$g/cm$^3$] | IgG binding after extraction [$\mu$g/cm$^3$] | Water permeability reduction / [%] |
|---|---|---|---|
| Ex. 1 | 7.0 | 8.2 | 3 |
| Ex. 2 | 13.0 | 22.3 | 3 |
| Ex. 3 | 5.7 | 7.9 | 4 |
| Ex. 4 | 11.6 | 14.4 | 4 |
| Ex. 5 | 11.0 | 23.5 | 2 |
| Ex. 6 | 15.7 | 28.7 | 0 |
| Ex. 7 | 4.3 | 4.7 | 57 |

(continued)

| No. | IgG binding [μg/cm³] | IgG binding after extraction [μg/cm³] | Water permeability reduction / [%] |
|---|---|---|---|
| Ex. 8 | 12.2 | 5.6 | 37 |
| Ex. 9 | 9.3 | 4.8 | 16 |
| Ex. 10 | 7.8 | 16.1 | 14 |
| Ex. 11 | 21.9 | 23.4 | 5 |
| Ex. 12 | 23.4 | 30.3 | 5 |
| Comp. Ex. 1 | 23.0 | 50.6 | |

For Ex. 13, the UV-grafting experiment of Ex. 3 was repeated with the dimethacrylate crosslinker TEGDMA on MicroPES 2F. The HEMA/TEGDA ratio was set to 10:1 and the monomer concentrations were 6 % HEMA and 0.6 % TEGDA dissolved in deionized water. Weight gain, IgG binding (before/after extraction) as well as water permeability reduction tests were performed for both Ex. 3 and Ex. 13. The results are summarized in table 76.

Table 7: Comparison between Ex. 3 and Ex. 13.

| | Ex. 3 | Ex. 13 |
|---|---|---|
| Weight gain / % | 2.3 | 4.8 |
| IgG binding before extraction / μg/cm² | 5.7 | 11.4 |
| IgG binding after extraction / μg/cm² | 7.9 | 13.0 |
| Water permeability reduction / % | 4 | 7 |

Similarly, for Ex. 14, the UV-grafting experiment of Ex. 13 was repeated with the difference that HEMA was changed to the acrylate HPA and TEGDMA was changed to the homologous acrylate TEGDA. Weight gain, IgG binding (before/after extraction) as well as water permeability reduction tests were performed. The results are summarized in table 8.

Table 8: Comparison between Ex. 13 and Ex. 14.

| | Ex. 13 | Ex. 14 |
|---|---|---|
| Weight gain / % | 4.8 | 4.2 |
| IgG binding before extraction / μg/cm² | 11.4 | 5.3 |
| IgG binding after extraction / μg/cm² | 13.0 | 6.5 |
| Water permeability reduction / % | 7 | 10 |

ATR-IR analysis

ATR-IR (Attenuated Total Reflection - Infra-Red) measurements were performed by using the FT-IR spectrometer Spectrum One equipped with the universal ATR accessory from Perkin Elmer. The analysis were carried out for the samples according to Ex. 1 to Ex. 6 and Ex. 7 to Ex. 12 in that the A% for both sides of the samples were measured. That is, for the roll side facing the UV lamp and for the air side ATR-IR analysis were carried out. The same experiments were carried out for Comp. Ex. 2 which was prepared analogous to Ex. 3, however, instead of UV-A lamp a germicidal UV lamp emitting 254 nm was used at an UV dose of 0.64 J/cm². The results are summarized in table 9.

Table 9: A% values for roll- and air side of membranes according to Ex. 1 to 6 and Ex. 7 to 12 and Comp. Ex. 2.

| Sample | $A\%_{Roll}$ [%] | $A\%_{Air}$ [%] |
|---|---|---|
| Ex. 1 | 7 | 3 |
| | | |

(continued)

| Sample | A%$_{Roll}$ [%] | A%$_{Air}$ [%] |
|---|---|---|
| Ex. 3 | 4.8 | 1.6 |
| | | |
| Ex. 5 | 1.5 | 1.3 |
| Ex. 6 | 1.2 | 0.9 |
| Comp. Ex. 2 | 23.7 | 0 |
| Ex. 7 | 7.2 | 2.0 |
| Ex. 8 | 5.1 | 2.2 |
| Ex. 9 | 2.9 | 1.4 |
| Ex. 10 | 4.0 | 2.2 |
| Ex. 11 | 1.7 | 1.3 |
| Ex. 12 | 1.4 | 1.3 |

This shows that in the membranes according to the present disclosure, not only the surface facing the UV source was modified. Rather, modification or grafting of the surface facing away the UV source was visible. That means that also the surface of the pores in the wall between the outer surfaces of the membrane was modified. This is in contrast to a membrane according to the state of the art where only the surface facing the UV source was modified. Accordingly, it was also demonstrated that the method according to the present disclosure comprising the use of UV irradiation with wavelengths greater than 300 nm was able to provide modification at least well into the thickness of the membrane, resulting in a higher modification of the total membrane surface.

Zeta-potential analysis was conducted on the roll side of samples from Comp. Ex. 1 and Ex. 7,9 and 11. The results are shown in Fig. 2.

Tensile strength/elongation at break analysis

Table 9: Mechanical test results.

| Sample | Tensile strength longitudinal (cN/15 mm) | Tensile strength transversal (cN/15 mm) | Elongation at break longitudinal [%] | Elongation at break transversal [%] |
|---|---|---|---|---|
| Unmodified | 1359 | 1201 | 59 | 76 |
| 6 % PEG-Diacrylate, 7 J/cm$^2$ + PET film (sheet, Lighthammer unit) | 1428 | 1289 | 51 | 67 |
| 6 % PEG-Diacrylate, 7 J/cm$^2$ + Glass-filter (roll to roll, FLC unit) | 1006 | 1107 | 6 | 19 |

## Claims

1. A polymeric membrane having a first surface and a second surface and a wall extending between the first and second surface, the membrane comprising pores on the first and second surfaces and throughout the wall, the membrane comprising a modified surface, the modified surface comprising acrylate and/or methacrylate polymers and/or copolymers, wherein the modified surface extends at least over the first and/or the second surface, and over the pores of at least 50 % of the thickness of the wall.

2. The polymeric membrane according to claim 1, wherein the polymeric membrane is selected from polymeric sulfone

membranes, polyethylene membranes, polypropylene membranes and polyacrylonitrile membranes.

**3.** The polymeric membrane according to claim 2, wherein the polymeric membrane is a polymeric sulfone membrane.

**4.** The polymeric membrane according to any one of the preceding claims, wherein the acrylate and/or methacrylate polymers and/or copolymers are obtained from monomers selected from at least one mono(meth)acrylate and at least one di(meth)acrylate, tri(meth)acrylate, tetra(meth)acrylate, penta(meth)acrylate and/or hexa(meth)acrylate and any combinations thereof.

**5.** The polymeric membrane according to any one of the preceding claims, wherein the copolymers and polymers are grafted to the polymeric sulfone in the modified surface by irradiation with actinic radiation having wavelengths greater than 290 nm, preferably greater than 300 nm.

**6.** The polymeric membrane according to any one of the preceding claims, wherein the membrane is a hydrophilic membrane.

**7.** The polymeric membrane according to any one of the preceding claims, wherein the polymeric membrane exhibits an adsorption of the protein IgG as described in the experimental section of less than 30 $\mu g/cm^2$, preferably of less than 25 $\mu g/cm^2$, more preferably of less than 20 $\mu g/cm^2$, even more preferably of less than 15 $\mu g/cm^2$.

**8.** A method for modifying the surface of a polymeric membrane, comprising the steps

(i) Providing a polymeric membrane;
(ii) Applying a solution comprising monomers selected from acrylates and methacrylates and any combinations thereof to the membrane;
(iii) Irradiating the membrane with actinic radiation having wavelengths greater than 290 nm.

**9.** The method according to claim 8, wherein irradiating with actinic radiation is carried out an irradiation dose of a mean value in the range of from 1 to 17 $J/cm^2$, preferably in the range of from 3 to 15 $J/cm^2$, more preferably in the range of from 5 to 13 $J/cm^2$, even more preferably from 7 to 11 $J/cm^2$.

**10.** The method according to claim 8 or claim 9, wherein irradiating with actinic irradiation is carried out at wavelengths greater than 300 nm, preferably at least 315 nm.

**11.** The method according to claim 10, wherein the actinic radiation is carried out at wavelengths in the range from 315 to 350 nm.

**12.** The method according to any one of claims 8 to 11, wherein the polymeric membrane is selected from polymeric sulfone membranes, polyethylene membranes, polypropylene membranes and polyacrylonitrile membranes, preferably from polymeric sulfone membranes.

**13.** The method according to any one of claims 8 to 12, wherein the monomers are selected from at least one monoacrylate and/or at least one monomethacrylate and at least one diacrylate and/or at least one dimethacrylate.

**14.** Use of the polymeric membrane according to any one of claims 1 to 7 for purification of liquid media, in particular aqueous media.

**15.** The use according to claim 14, wherein the use comprises pharmaceutical, biopharmaceutical or medical applications.

**Figure 1**

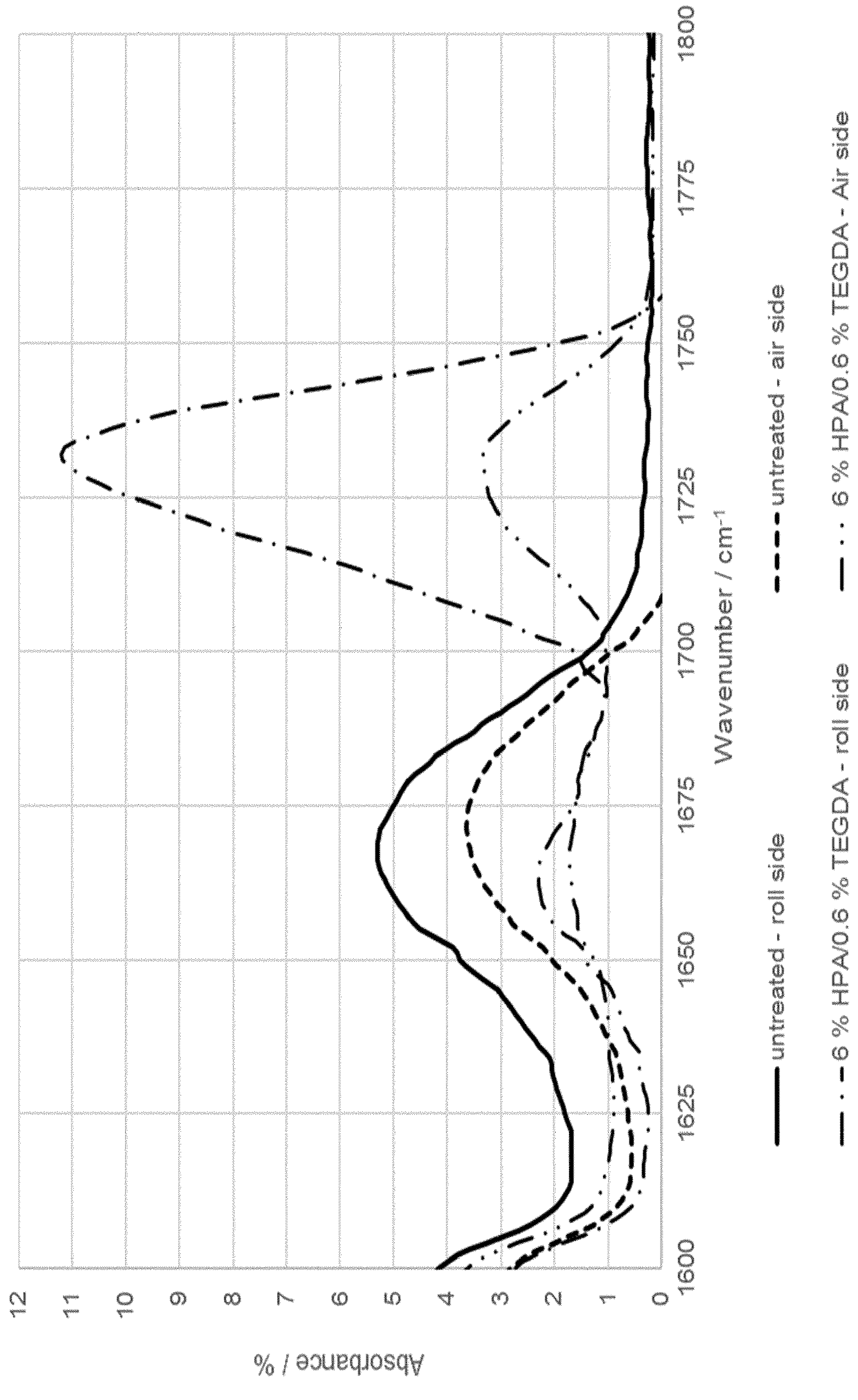
Absorbance / %
12
11
10
9
8
7
6
5
4
3
2
1
0
1600
1625
1650
1675
1700
1725
1750
1775
1800
Wavenumber / cm-1
untreated - roll side
untreated - air side
6 % HPA/0.6 % TEGDA - roll side
6 % HPA/0.6 % TEGDA - Air side

**Figure 2**

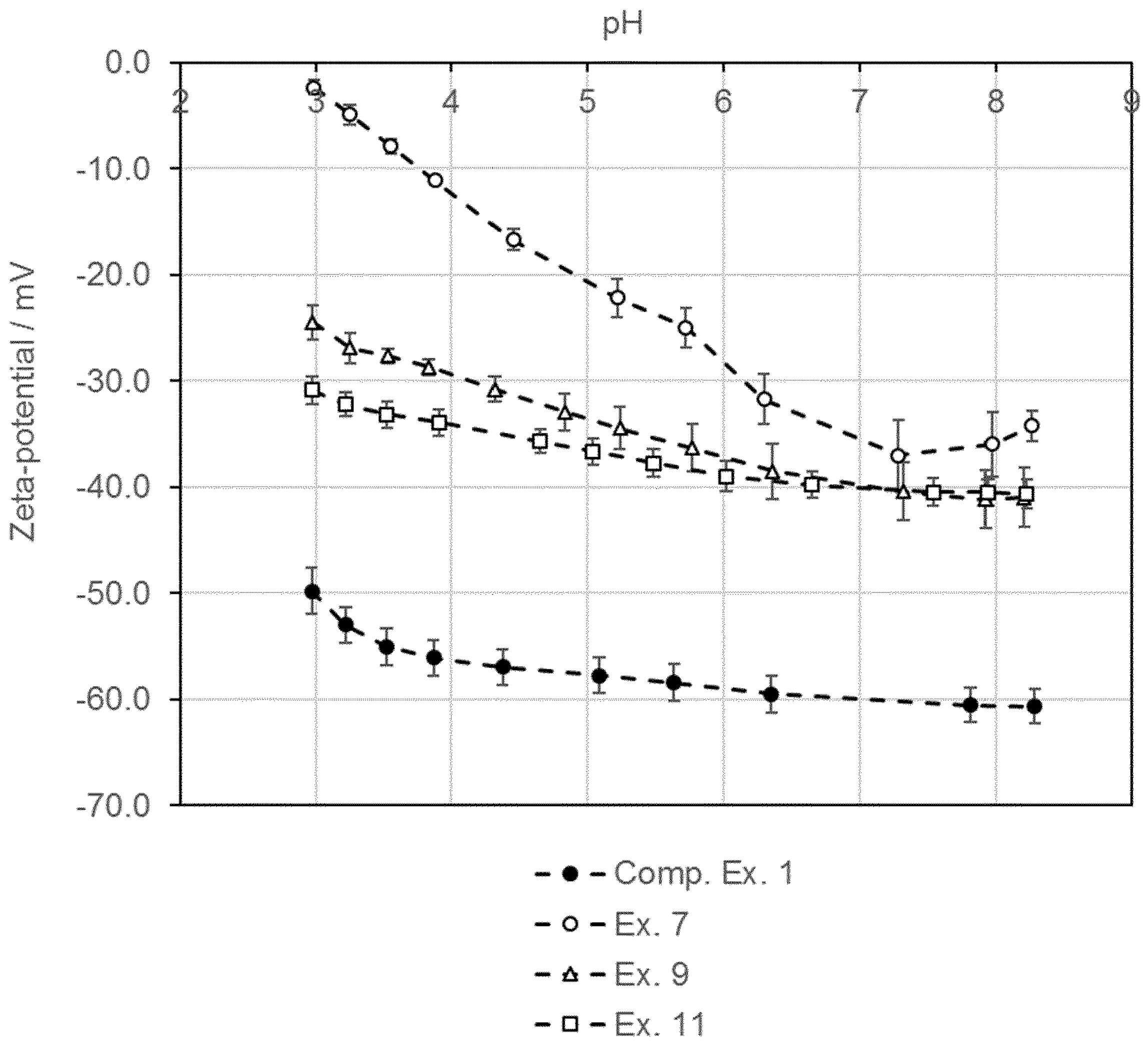
pH
2
3
4
5
6
7
8
9
0.0
-10.0
-20.0
-30.0
-40.0
-50.0
-60.0
-70.0
Zeta-potential / mV
Comp. Ex. 1
Ex. 7
Ex. 9
Ex. 11

Europäisches Patentamt
European Patent Office
Office européen des brevets

# EUROPEAN SEARCH REPORT

Application Number
EP 18 18 1039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 5 468 390 A (CRIVELLO JAMES V [US] ET AL) 21 November 1995 (1995-11-21)<br>* claims 1-11; examples 1-3 * | 1-15 | INV.<br>B01D67/00<br>B01D69/02<br>B01D69/06<br>B01D71/68 |
| X | US 6 193 077 B1 (WITHAM MICHAEL J [US] ET AL) 27 February 2001 (2001-02-27)<br>* claims 1-7; examples 1-3 * | 1-7,14, 15 | |
| X | US 6 039 872 A (WU XIAOSONG [US] ET AL) 21 March 2000 (2000-03-21)<br>* examples 1-4 * | 1-7,14, 15 | |
| X | EP 2 641 653 A1 (AGFA GEVAERT [BE]; UNIV LEUVEN KATH [BE])<br>25 September 2013 (2013-09-25)<br>* example 2 * | 1-7,14, 15 | |

TECHNICAL FIELDS SEARCHED (IPC)

B01D

The present search report has been drawn up for all claims

1

| Place of search | Date of completion of the search | Examiner |
|---|---|---|
| Munich | 11 December 2018 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 18 18 1039

This annex lists the patent family members relating to the patent documents cited in the above-mentioned European search report. The members are as contained in the European Patent Office EDP file on
The European Patent Office is in no way liable for these particulars which are merely given for the purpose of information.

11-12-2018

| Patent document cited in search report | | Publication date | Patent family member(s) | | | Publication date |
|---|---|---|---|---|---|---|
| US 5468390 | A | 21-11-1995 | NONE | | | |
| US 6193077 | B1 | 27-02-2001 | AU | 3225000 | A | 25-08-2000 |
| | | | US | 6193077 | B1 | 27-02-2001 |
| | | | US | 2001021421 | A1 | 13-09-2001 |
| | | | WO | 0045941 | A1 | 10-08-2000 |
| US 6039872 | A | 21-03-2000 | AT | 321601 | T | 15-04-2006 |
| | | | AU | 733554 | B2 | 17-05-2001 |
| | | | CA | 2249253 | A1 | 27-04-1999 |
| | | | DE | 69834013 | T2 | 02-11-2006 |
| | | | EP | 0911073 | A1 | 28-04-1999 |
| | | | JP | 4308948 | B2 | 05-08-2009 |
| | | | JP | H11188247 | A | 13-07-1999 |
| | | | US | 6039872 | A | 21-03-2000 |
| EP 2641653 | A1 | 25-09-2013 | CN | 104364005 | A | 18-02-2015 |
| | | | EP | 2641653 | A1 | 25-09-2013 |
| | | | US | 2015291843 | A1 | 15-10-2015 |
| | | | US | 2017121529 | A1 | 04-05-2017 |
| | | | WO | 2013139805 | A1 | 26-09-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9045602 B2
- US 5468390 A
- US 6852769 B2
- DE 3617724 A